(19) **Europäisches Patentamt European Patent Office Office européen des brevets**

(11) **EP 1 634 939 B1**

(12) **FASCICULE DE BREVET EUROPEEN**

(45) Date de publication et mention
de la délivrance du brevet:
**11.01.2012 Bulletin 2012/02**

(51) Int Cl.:
***C10G 49/02*** *(2006.01)*

(21) Numéro de dépôt: **05291855.4**

(22) Date de dépôt: **07.09.2005**

(54) **Procédé de sulfuration de catalyseurs d'hydrotraitement**

Verfahren zur Sulfidierung von Hydrobehandlungskatalysatoren

Process for sulphiding of hydrotreatment catalysts

(84) Etats contractants désignés:
**DE FR IT LU**

(30) Priorité: **08.09.2004 FR 0409544**

(43) Date de publication de la demande:
**15.03.2006 Bulletin 2006/11**

(73) Titulaire: **Institut Français du Pétrole
92852 Rueil Malmaison Cedex (FR)**

(72) Inventeurs:
• **Guillaume, Denis
38200 Vienne (FR)**
• **Lopez, Sylvie
69007 Lyon (FR)**
• **Cseri, Tivadar
42400 St Chamond (FR)**

(56) Documents cités:
**EP-A- 0 993 868    GB-A- 1 401 620
US-A- 3 016 346**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 634 939 B1

## Description

### Domaine de l'invention

L'invention concerne un procédé de sulfuration des catalyseurs d'hydrotraitement, notamment les catalyseurs d'hydrotraitement oxydes réfractaires à la sulfuration.

L'invention concerne également les catalyseurs sulfurés par ledit procédé de sulfuration.

L'invention concerne aussi l'utilisation du catalyseur obtenu par ledit procédé de sulfuration pour l'hydroraffinage et/ou l'hydroconversion/hydrocraquage de charges hydrocarbonées.

### Art antérieur

L'hydroraffinage des charges hydrocarbonées telles que les coupes pétrolières soufrées prend une importance de plus en plus grande dans la pratique du raffinage avec la nécessité croissante de réduire la quantité de soufre présente dans les produits pétroliers et de convertir des fractions lourdes en fractions plus légères valorisables en tant que carburants. Cet état de fait tient d'une part à l'intérêt économique de valoriser au mieux des bruts importés de plus en plus riches en fractions lourdes, pauvres en hydrogène et riches en hétéroatomes, dont l'azote et le soufre, et d'autre part aux spécifications imposées dans les divers pays pour les carburants commerciaux.

Les procédés actuels d'hydroraffinage catalytique utilisent des catalyseurs capables de promouvoir les principales réactions utiles à la mise en oeuvre de ces coupes, en particulier l'hydrogénation des noyaux aromatiques (HAR), l'hydrodésulfuration (HDS), l'hydrodéazotation (HDN) et autres hydroéliminations. L'hydroraffinage est employé pour traiter des charges telles que les essences, les gazoles, les gazoles sous vide, les résidus atmosphériques ou sous vide, désasphaltés ou non. Il est tout aussi indiqué pour le prétraitement des charges des procédés de craquage et d'hydrocraquage catalytique. Au moins une étape d'hydroraffinage est habituellement intégrée dans chacun des schémas connus de valorisation des coupes pétrolières.

Les catalyseurs utilisés dans ces procédés comprennent généralement au moins un métal du groupe VIB (colonne 6 de la nouvelle notation de la table périodique des éléments) et/ou au moins un métal du groupe VIII (colonnes 8, 9 et 10 de la nouvelle notation de la table périodique des éléments). Les formulations les plus courantes sont de type cobalt-molybdène (CoMo), nickel-molybdène (NiMo) et nickel-tungstène (Ni-W). Ces catalyseurs peuvent se présenter à l'état supporté ou sous forme massique. A l'état supporté, la matrice poreuse est généralement un oxyde amorphe ou mal cristallisé (alumine, silice-alumine, etc.) éventuellement associé à un tamis moléculaire zéolithique ou non zéolithique.

La forme active et stable de ces catalyseurs d'hydrotraitement étant la forme sulfurée, lorsqu'ils se présentent sous forme d'oxyde après préparation, ces catalyseurs doivent subir une sulfuration. La sulfuration peut être réalisée, dans l'unité d'hydrotraitement elle-même (on parle alors de sulfuration *in situ)* ou préalablement au chargement du catalyseur dans l'unité (on parle alors de "sulfuration ex *situ").* La sulfuration peut également être réalisée en deux étapes : une étape d'activation ou de présulfuration suivie d'une étape de sulfuration complète du catalyseur dans l'unité. L'étape d'activation ou de présulfuration peut être réalisée *ex situ* ou *in situ* (dans l'unité d'hydrotraitement) en fonction de la nature de l'opération.

Ces différentes sulfurations font intervenir des composés contenant du soufre et pouvant donner de l'hydrogène sulfuré ($H_2S$), c'est en effet l'hydrogène sulfuré qui est l'agent sulfurant de ces catalyseurs.

Les procédures de *sulfuration in situ* sont effectuées dans l'unité sous pression d'hydrogène le plus souvent avec des charges liquides plus ou moins soufrées issues de la distillation d'un pétrole brut, ne contenant sensiblement pas de composés oléfiniques ni de composés dioléfiniques. On parle alors de sulfuration *in situ* par voie humide. La sulfuration *in situ* sous pression d'hydrogène peut également être réalisée directement avec de l'$H_2S$. On parle alors de *sulfuration in situ* par voie sèche. Un des principaux avantages d'utiliser une phase liquide est que l'élévation de la température due à l'exothermicité de la réaction de sulfuration reste très faible, car les calories engendrées sont aisément éliminées par la phase liquide. Dans le cas d'une *sulfuration in situ* par voie sèche, l'exothermicité de la réaction sera alors plus grande puisque les calories ne seront plus éliminées par la phase liquide.

Parmi les sulfurations *in situ* par voie humide, on trouve les sulfurations avec ou sans "spiking agents". Les "spiking agents" sont des composés soufrés solubles dans les charges liquides permettant de produire du sulfure d'hydrogène à des températures plus basses que les composés soufrés initialement contenus dans les charges liquides, limitant ainsi les réactions de réduction des oxydes métalliques à basse température (les oxydes métalliques réduits étant en effet plus difficiles à sulfurer que les oxydes métalliques non réduits). Les sulfurations sans agent sulfurant additionnel (nonspiked feestock) donnent en général des catalyseurs sulfurés moins actifs, comme le montre H. Hallie dans Oil and Gas Journal, Dec. 20, 1982, pp 69-74. Industriellement, l'agent sulfurant additionnel préféré est le DMDS pour des raisons économiques, de sécurité (faible volatilité, faible inflammabilité, toxicité modérée) et d'efficacité (agent à forte teneur en soufre). Les autres composés contenant du soufre qui peuvent être utilisés comme agents sulfurants additionnels sont choisis dans le groupe formé par les polysulfures et par exemple les polysulfures organiques, les mercaptans, les sulfures, les disulfures, le soufre élémentaire dissous et/ou partiellement en suspension.

Pour ce type de sulfuration *in situ,* le document FR 2 778 347 A1 recommande, pour améliorer les performances des catalyseurs en terme d'activité et de stabilité, d'injecter au moins 130 % de la stoechiométrie de soufre nécessaire à la sulfuration complète du catalyseur avant que le catalyseur n'atteigne la température finale de sulfuration (généralement inférieure à 380°C, pour limiter les réactions de cokage), en respectant de préférence la condition qu'au moins 50 % de la stoechiométrie de soufre nécessaire à la sulfuration complète du catalyseur soient incorporés avant que la température n'atteigne 250°C en accord avec FR 2 755 379 A1.

Egalement dans le cas de la sulfuration *in situ,* le document GB-A-1 401 620 divulgue un procédé de préparation de catalyseurs supportés contenant des sulfures de nickel, cobalt, molybdène et tungstène, dans lequel les sels solubles en solution aqueuse des métaux indiqués sont traités par un gaz contenant de l'$H_2S$ à une température inférieure à 150°C et dans une étape ultérieure, le matériau est traité par un gaz contenant de l'hydrogène à une température inférieure à 150°C.

Selon US 6 325 920 B1, dans le cas d'une sulfuration *in situ* par voie humide avec agent de sulfuration additionnel ("spiking agent"), la présence d'un additif de type dialkyl orthophthalate à raison de 0,02 à 5 % poids par rapport à l'agent sulfurant additionnel permet l'obtention de catalyseurs sulfurés plus actifs.

Enfin, l'ajout d'un composé azoté dans la charge de sulfuration est recommandé par FR 2 778 346 A1 pour la sulfuration des catalyseurs d'hydroconversion contenant au moins un métal du groupe VIII (colonne 8, 9 et 10 de la nouvelle notation de la table périodique des éléments) et au moins un élément acide. Le contrôle de l'activité des sites acides de ce type de catalyseur obtenue en effectuant une passivation d'une partie de ces sites par ajout d'un composé azoté pendant la sulfuration évite un craquage intempestif de la charge à traiter sur ces sites.

Les procédures de sulfurations *ex situ,* qui consistent à sulfurer le catalyseur en dehors du réacteur d'hydrotraitement, permettent aux raffineurs de s'affranchir d'une étape de sulfuration *in situ* consommatrice de temps. L'autre intérêt des sulfurations *ex situ* est la fourniture directe à l'utilisateur d'un catalyseur déjà actif dont l'activité catalytique est caractérisable avant chargement dans le réacteur. Ce type de sulfuration supprime ainsi tout risque d'obtenir une activité catalytique non optimale dans le réacteur.

Ces sulfurations *ex situ* se caractérisent par une étape finale de passivation. En effet, les phases sulfures présentent une très grande réactivité vis à vis de l'air ambiant (caractère auto-échauffant par oxydation) interdisant leur manipulation ultérieure sans un traitement complémentaire visant à limiter cette réactivité. Parmi les procédures de sulfurations *ex situ* commerciales, citons le procédé TOTSUCAT de la société Eurecat (EP 0 564 317 B1 et EP 0 707 890 B1) et le procédé XpresS de la société TRICAT (brevet US-A-5 958 816).

Le procédé TOTSUCAT consiste en un procédé comportant l'incorporation dans un catalyseur et en partie plus ou moins grande dans la porosité de ce catalyseur d'un agent de sulfuration choisi dans le groupe constitué par exemple notamment par le soufre élémentaire et les polysulfures organiques, cette incorporation étant effectuée en présence d'un solvant de type white spirit qui renferme en totalité ou partie un constituant de type oléfine ou coupe oléfinique, par exemple de type huile végétale, ou un constituant similaire, le procédé comportant un traitement à l'hydrogène pur ou dilué entre 150 et 700°C du catalyseur, puis une étape de passivation oxydante. Cette étape consiste à effectuer un balayage du catalyseur par un flux gazeux oxydant contenant de l'oxygène. Le document WO 2004/028691 A2 décrit un procédé de passivation dans lequel le catalyseur sulfuré est mis en contact, lors d'un traitement thermique à plus de 50°C, avec un flux gazeux oxydant contenant au moins 2 kPa d'oxygène, le flux gazeux pouvant être sec ou humide.

Le procédé XpresS consiste à sulfurer les catalyseurs sous atmosphère gaz $H_2S/H_2/N_2$ dans un réacteur à lit expansé ou lit fluidisé. Cette technologie à lit expansé limite les problèmes d'élévation de température liée à l'exothermicité de la réaction de sulfuration, permettant ainsi d'appliquer des températures de sulfuration plus élevées que celles utilisées dans un réacteur à lit fixe. Cette technologie permet également de maximiser les contacts entre les réactifs et le catalyseur favorisant ainsi une meilleure sulfuration. Enfin, l'atmosphère gaz $H_2S/H_2/N_2$ permet l'obtention de catalyseurs sulfurés non cokés. Le gaz de sulfuration contient en volume de 3 à 10 % d'$H_2S$, de 3 à 10 % d'$H_2$ et de 80 à 94 % d'azote soit un rapport molaire $H_2S/H_2$ variant de 0,33 à 3,33. L'étape de passivation, qui est également de type oxydante, est effectuée par balayage d'air dilué dans l'azote telle que la concentration volumique en oxygène soit comprise entre 0,25 et 21 % de préférence entre 0,25 et 2,5 %.

Les procédures de sulfuration à deux étapes comprennent une étape d'activation ou de présulfuration suivie d'une étape de sulfuration complète du catalyseur dans l'unité d'hydrotraitement. L'étape d'activation ou de présulfuration peut être réalisée *ex situ* ou dans l'unité d'hydrotraitement en fonction de la nature de l'opération.

Dans ce cadre, le document WO 02/066161 A1 revendique un procédé de *sulfuration in situ* d'un catalyseur d'hydrotraitement comprenant une étape de traitement du catalyseur avec un mercaptan tertiaire (tertiododécylmercaptan) en l'absence d'hydrogène, suivie dans le même réacteur d'une étape de traitement avec un autre agent de sulfuration (type DMDS) en présence d'hydrogène. Il a été trouvé que cette sulfuration à deux étapes permettait d'obtenir des catalyseurs significativement plus actifs que ceux sulfurés au DMDS seul.

Le document US 6 316 382 B1 revendique un procédé de sulfuration caractérisé en ce qu'il est procédé à une étape de réduction préalable avec au moins un gaz réducteur autre que l'hydrogène avant de procéder à l'étape de sulfuration. Ce type de procédé est particulièrement adapté aux catalyseurs contenant au moins un élément choisi parmi le groupe IIIB y compris les lanthanides et les actinides (colonne 3 de la nouvelle notation de la table périodique), le groupe IVB (colonne 4 de la nouvelle notation de la table périodique), le groupe VB (colonne 5 de la nouvelle notation de la table périodique), pour lesquels les méthodes de sulfuration traditionnelles sont pratiquement inefficaces. La sulfuration de ce type de catalyseur préalablement réduit d'une façon modérée par un gaz réducteur autre que l'hydrogène permet d'obtenir une meilleure sulfuration et une meilleure dispersion de la phase active.

Le procédé de présulfuration ACTICAT de la société CRI (US-A-5 688 736 et US-A-5 468 372) et le procédé SULFICAT de la société EURECAT (EP 0 130 850 B1 et US-A-4 530 917) entrent également dans cette catégorie de procédé.

Le procédé ACTICAT est caractérisé en ce qu'il comprend une étape d'incorporation du soufre élémentaire dans la porosité du catalyseur à la température de fusion du soufre suivie d'un traitement thermique sous inerte entre 200 et 325°C en présence d'un hydrocarbure oléfinique liquide. Les catalyseurs ainsi présulfurés sont chargés dans les unités d'hydrotraitement et se sulfurent sous hydrogène lors de la montée en température sous charge réelle. Les oxydes métalliques et l'hydrogène réagissent avec le soufre incorporé, produisant ainsi de l'hydrogène sulfuré, de l'eau et les sulfures de métaux. D'après le document WO 02/32572 A2, ce procédé est préféré pour sulfurer les catalyseurs oxydes non calcinés à fraction volatile.

Le procédé SULFICAT consiste à incorporer du soufre dans la porosité du catalyseur en l'absence d'hydrogène et à partir d'un polysulfure le ditertiododécylpoly-sulfure (TPS 32) ou le ditertiononylpolysylfure (TPS37) dissous dans un solvant adéquat du type white spirit, cette incorporation s'effectuant de préférence à température ambiante. Dans une deuxième étape, *réalisée in situ,* on procède à une étape d'activation en présence d'hydrogène. Comme pour le procédé ACTICAT, l'agent de sulfuration introduit dans le catalyseur en quantité prédéterminée donne naissance sous hydrogène à de l'hydrogène sulfuré lequel conduira au sulfure ou aux sulfures désirés du ou des métaux présents dans le catalyseur.

Le problème posé à l'homme du métier est l'obtention de catalyseurs très bien sulfurés afin de maximiser leurs performances catalytiques en terme d'activité et de stabilité. Le caractère sulfuré est évalué par le taux de sulfuration défini comme le rapport entre les ratios molaires $S/(métaux)$ expérimental et $S/(métaux)$ théorique, multiplié par 100 ; le rapport théorique correspondant à la transformation totale des oxydes de métaux en sulfures. Un catalyseur est considéré comme bien sulfuré lorsque son taux de sulfuration est supérieur à 90 %, de préférence supérieur à 95 % et de manière encore plus préférée égal à 100 %. Ce taux de sulfuration total ou presque total est d'autant plus difficile à atteindre que les phases oxydes précurseurs de phase active sont réfractaires à la sulfuration.

Le caractère réfractaire peut être lié à la présence de fortes teneurs en phase oxyde (catalyseurs supportés ou catalyseurs massiques) et/ou à la nature des phases oxydes précurseurs des phases actives et/ou à la présence de phases oxydes cristallisées non désirées et/ou à la présence d'éléments dopants et/ou à la nature du support dans le cas des catalyseurs supportés. Les méthodes de sulfuration traditionnelles (sulfuration en phase liquide sous pression d'hydrogène par un mélange d'une charge d'hydrocarbure et d'un composé soufré tel que le DMDS ou sulfuration sous mélange gazeux $H_2S$-$H_2$ avec un faible rapport molaire $H_2S/H_2$) sont inefficaces pour obtenir un taux de sulfuration total des catalyseurs réfractaires.

On a maintenant découvert de manière surprenante que les catalyseurs réfractaires peuvent être très bien sulfurés, même sans activation préalable, sous atmosphère gaz contenant de l'hydrogène sulfuré et de l'hydrogène à condition d'avoir un rapport molaire $H_2S/H_2$ supérieur à 4, de préférence supérieur à 7 et une pression partielle d'$H_2S$ au moins égale à 1 kPa. Sans vouloir être lié par une quelconque théorie, les conditions de sulfuration découvertes par la demanderesse permettraient de limiter les réactions de réduction des oxydes métalliques par l'hydrogène, qui sont pour la sulfuration des oxydes réfractaires.

**Description de l'invention**

**Description du procédé de sulfuration selon l'invention**

L'invention concerne un procédé de sulfuration des catalyseurs, notamment les catalyseurs d'hydrotraitement réfractaires, qui comprend une étape de sulfuration sous atmosphère gaz contenant de l'hydrogène sulfuré ($H_2S$), de l'hydrogène ($H_2$) et éventuellement un gaz inerte de dilution et dans lequel le rapport molaire $H_2S/H_2$ est supérieur à 4, de préférence supérieur à 7 et la pression partielle d'$H_2S$ est au moins égale à 1 kPa.

Selon un mode préféré de la présente invention, la dilution par un gaz inerte de l'atmosphère de sulfuration (de préférence l'azote) est réalisée pour limiter les élévations de température liées à l'exothermicité des réactions de sulfuration.

L'étape de sulfuration peut être *réalisée in situ* ou *ex situ.*

Ladite étape de sulfuration est effectuée généralement à une température supérieure à la température d'injection du gaz sulfurant (généralement inférieure à 200°C) et inférieure à 600°C, de préférence inférieure à 500°C.

Le rapport molaire $H_2S/H_2$ est de manière préférée inférieur à 20 et de manière plus préférée inférieur à 10.

## Mode de réalisation in situ

Dans le mode de réalisation *in situ,* l'hydrogène sulfuré peut provenir des unités de lavage des gaz aux amines présentes dans la raffinerie pour épurer les gaz en provenance des unités d'hydrotraitement, de craquage thermique, de craquage catalytique et d'hydrocraquage.

Dans le mode de réalisation *in situ,* après chargement, l'unité d'hydrotraitement est purgée par un gaz inerte (de préférence l'azote) puis par de l'hydrogène et elle est ensuite pressurisée jusqu'à la pression nominale du procédé ou jusqu'à la pression minimale de fonctionnement du compresseur de recycle. La pression totale n'a pas d'influence sur la sulfurabilité des oxydes réfractaires, les paramètres principaux étant le rapport molaire $H_2S/H_2$ qui doit être supérieur à 4, de préférence supérieur à 7 et la pression partielle d'$H_2S$ qui doit être au moins égale à 1kPa. Le lit catalytique est généralement ensuite chauffé sous hydrogène jusqu'à une température inférieure à 200°C, de préférence inférieure à 180°C. L'$H_2S$ pur ou en mélange avec un gaz inerte (de préférence l'azote) est alors injecté. La température d'injection du gaz sulfurant est généralement inférieure à 200°C. La zone de température préférée pour l'injection de l'$H_2S$ pur ou en mélange avec un gaz inerte (de préférence l'azote) est de 80 à 180°C.

Le débit de gaz total $H_2S$-$H_2$ ou $H_2S$-$H_2$-gaz inerte qui est calculé par rapport au volume de catalyseur chargé est compris entre 1 et 10000 litres de gaz par litre de catalyseur, mesurés dans les conditions normales de température et de pression, et de façon préférée entre 5 et 5000 litres de gaz par litre de catalyseur.

La température finale de sulfuration est généralement supérieure à 300°C et inférieure à 600°C, et de manière préférée inférieure à 500°C. Une température finale de sulfuration entre 300 et 380°C sera encore plus préférée. La durée du palier à la température finale de sulfuration est généralement de quelques heures (inférieure à 24h).

L'augmentation de la température entre la température d'injection du gaz sulfurant et la température finale est effectuée par les moyens connus de l'homme de l'art à un rythme compatible avec la bonne tenue mécanique et l'élimination des contraintes engendrées par la dilatation des différentes parties de l'installation. A titre indicatif, la montée en température est généralement de l'ordre de 1 à 25°C par heure. Cette montée en température peut être effectuée soit directement jusqu'au palier final de température soit en respectant un ou plusieurs paliers intermédiaires.

Un palier intermédiaire à une température comprise entre 210 et 250°C est préféré avant la montée en température à la température finale de sulfuration.

Après le palier de sulfuration, la température est baissée à une température inférieure à 300°C, de préférence inférieure à 250°C. Après ce refroidissement, l'arrivée d'$H_2S$ ou en mélange avec un gaz inerte (de préférence l'azote) est arrêtée. L'unité est mise si nécessaire à la pression du procédé, et est prête pour la mise sous charge.

De manière préférée, dans son *mode in situ,* le procédé de sulfuration de la présente invention comprend les étapes suivantes :

- purge de l'unité d'hydrotraitement après chargement par un gaz inerte (de préférence l'azote) puis par de l'hydrogène et pressurisation de l'unité jusqu'à la pression nominale du procédé d'hydrotraitement ou jusqu'à la pression minimale de fonctionnement du compresseur de recycle ;
- chauffage sous hydrogène du lit catalytique jusqu'à une température inférieure à 200°C ;
- étape de sulfuration :

  - injection d'$H_2S$ pur ou en mélange avec un gaz inerte (de préférence l'azote) avec un débit de gaz total $H_2S$-$H_2$ ou $H_2S$-$H_2$-gaz inerte calculé par rapport au volume de catalyseur chargé compris entre 1 et 10000 litres de gaz par litre de catalyseur, mesurés dans les conditions normales de température et de pression et avec une température d'injection du gaz sulfurant inférieure à 200°C ;
  - montée en température jusqu'à une température finale de sulfuration supérieure à 300°C et inférieure à 600°C, directement jusqu'au palier final de sulfuration ou en respectant un ou plusieurs paliers ;
  - palier à la température finale de sulfuration pour une durée inférieure à 24 h ;

- refroidissement de l'unité sous atmosphère sulfurante jusqu'à une température inférieure à 300°C ;
- arrêt de l'arrivée d'$H_2S$ pur ou en mélange avec un gaz inerte (de préférence l'azote) et mise si nécessaire de l'unité à la pression du procédé d'hydrotraitement.

Selon une variante de ce mode, un palier intermédiaire à une température comprise entre 210 et 250°C est préféré avant la montée en température à la température finale de sulfuration.

Selon une autre variante de ce mode, une température finale de sulfuration entre 300 et 380°C sera encore plus préférée.

## Mode de réalisation ex situ

Dans le mode de réalisation *ex situ,* l'étape de sulfuration est suivie d'une étape de passivation oxydante sous flux gazeux, contenant au plus 21,3 kPa d'oxygène, à une température préférentiellement inférieure à 150°C.

Les technologies en lit fixe, en lit fluidisé ou en lit mobile peuvent être utilisées.

Dans le mode de réalisation *ex situ* du procédé selon l'invention, les conditions de température, de pression, et de débit de l'étape de sulfuration, peuvent être sensiblement les mêmes que les conditions *in situ* (mode préféré, notamment avec la technologie lit fixe), mais elles peuvent être différentes, notamment en ce qui concerne les débits. Par ailleurs une étape finale de passivation est requise.

Après l'étape de refroidissement sous $H_2S$-$H_2$ ou $H_2S$-$H_2$-gaz inerte (de préférence l'azote) jusqu'à une température inférieure à 300°C, de préférence inférieure à 250°C, le catalyseur est refroidi sous $H_2$ jusqu'à une température inférieure à 150°C, de manière préférée à une température comprise entre 50 entre 100°C. A cette température, l'unité est ensuite purgée sous gaz inerte (de préférence l'azote) pendant quelques heures (généralement moins de 24 heures) pour éliminer l'$H_2S$ et l'$H_2$. Le catalyseur est ensuite traité sous un flux gazeux oxydant contenant une pression partielle en oxygène pouvant atteindre 21,3 kPa.

A la pression partielle d'oxygène maximale atteinte, l'unité est refroidie jusqu'à la température ambiante, dépressurisée si nécessaire et le catalyseur est déchargé sous air ambiant sans aucun risque d'auto-échauffement.

De manière préférée, le procédé de sulfuration dans son mode *ex situ,* comprend les étapes suivantes :

- purge de l'unité de sulfuration après chargement par un gaz inerte (de préférence l'azote) puis par de l'hydrogène et pressurisation de l'unité si nécessaire ;
- chauffage sous hydrogène du lit catalytique jusqu'à une température inférieure à 200°C ;
- étape de sulfuration

  - injection de l'$H_2S$ pur ou en mélange avec un gaz inerte (de préférence l'azote) dans l'unité de sulfuration avec un débit de gaz total $H_2S$-$H_2$ ou $H_2S$-$H_2$-gaz inerte calculé par rapport au volume de catalyseur chargé compris entre 1 et 10000 litres de gaz par litre de catalyseur, mesurés dans les conditions normales de température et de pression avec une température d'injection du gaz sulfurant inférieure à 200°C ;
  - montée en température jusqu'à une température finale de sulfuration supérieure à 300°C et inférieure à 600°C, directement jusqu'au palier final de sulfuration ou en respectant un ou plusieurs paliers ;
  - palier à la température finale de sulfuration pour une durée inférieure à 24 heures ;

- refroidissement de l'unité sous atmosphère sulfurante jusqu'à une température inférieure à 300°C ;
- refroidissement sous $H_2$ de l'unité jusqu'à une température inférieure à 150°C ;
- purge sous gaz inerte (de préférence l'azote) de l'unité à une température inférieure à 150°C pour éliminer l'$H_2S$ et l'$H_2$ ;
- étape de passivation oxydante : traitement du catalyseur sous un flux gazeux oxydant contenant une pression partielle en oxygène d'au plus 21,3 kPa et à une température inférieure à 150°C pour une durée maximale de 24 heures.
- refroidissement de l'unité jusqu'à la température ambiante, dépressurisation si nécessaire et déchargement du catalyseur sous air ambiant.

De manière très préférée, la pression partielle d'oxygène est augmentée de 1kPa à 21,3 kPa par palier de 2 à 4 kPa. Le changement de palier est conditionné par la disparition totale de l'effet exothermique et par le retour à la température avant introduction de l'oxygène.

## Caractéristiques des catalyseurs pouvant être soumis au traitement de sulfuration selon l'invention

Les procédés d'hydrotraitement consistent à traiter sous pression d'hydrogène une coupe pétrolière à l'aide d'un catalyseur solide. Les catalyseurs d'hydrotraitement, notamment les catalyseurs réfractaires concernés par l'invention, se caractérisent par la présence de fortes teneurs en phase active comprenant au moins un élément des groupes VIB et VIII (catalyseurs supportés à fortes teneurs en phase active ou catalyseurs massiques) et éventuellement au moins un élément choisi parmi le groupe IIIB y compris les lanthanides et les actinides, le groupe IVB et le groupe VB et éventuellement par la présence de dopants choisis dans le groupe : P, B, Si et halogènes (groupeVIIA) et éventuellement à la présence de phases oxydes cristallisées comme les phases $Al_2(MoO_4)$, $CoAl_2O_4$, $NiAl_2O_4$, $MoO_3$, $Co_3O_4$, $CoMoO_4$, $NiMoO_4$, etc., qui peuvent apparaître lors de la préparation et/ou de la régénération des catalyseurs d'hydrotraitement à base d'éléments des groupes VIB et VIII.

Ces catalyseurs renferment généralement en % poids par rapport à la masse totale du catalyseur à l'état oxyde au moins un métal choisi dans les groupes suivants et avec les teneurs suivantes :

- 0,01 à 75 %, de préférence de 0,01 à 50 % et de manière encore plus préférée de 0,01 à 40 % d'au moins un métal choisi parmi les éléments des groupes IIIB, IVB, VB,
- 0,01 à 75 %, de préférence de 0,01 à 50 % et de manière encore plus préférée de 0,01 à 40 % d'au moins un métal choisi parmi les éléments du groupe VIB,
- 0 à 30 %, de préférence de 0,01 à 25 % d'au moins un métal du groupe VIII,
- 0 à 99 %, de préférence 1 à 98 % d'au moins un support choisi dans le groupe constitué par les matrices amorphes et les matrices mal cristallisées, et éventuellement,
- 0 à 90 %, de préférence de 0,01 à 85 % et de manière encore plus préférée de 0,01 à 80 % d'un tamis moléculaire zéolithique ou non,
- 0 à 40 %, de préférence de 0,01 à 30 % et de manière encore plus préférée de 0,01 à 20 % d'au moins un élément choisi dans le groupe constitué par le bore, le silicium et le phosphore.
- 0 à 20 %, de préférence de 0,01 à 15 % et de manière encore plus préférée de 0,01 à 10 % d'au moins un élément choisi dans le groupe VIIA.

Les catalyseurs supportés sulfurés par le procédé de la présente invention peuvent être préparés par toute méthode bien connue de l'homme du métier.

De façon générale, le procédé de préparation des catalyseurs supportés sulfurés par le procédé de la présente invention comprend les étapes suivantes :

a) on forme une solution qui renferme au moins les composés suivants : un solvant, au moins une source d'un élément des groupes VIII et VIB, et/ou au moins une source d'un élément des groupes IIIB y compris les lanthanides et les actinides, IVB et le groupe VB et éventuellement au moins une source d'un élément choisi dans le groupe formé par les éléments P, B, Si et halogènes (groupeVIIA).

b) on mouille ou on imprègne une matrice par ladite solution et on maintient ledit mélange à une température comprise entre la température comprise entre la température ambiante et 80°C pendant plusieurs heures.

c) on sèche le solide humide obtenu à l'étape b) à une température comprise entre 80°C et 150°C, généralement sous air, et

d) on calcine le solide sec obtenu à l'étape c) à une température supérieure à 150°C , généralement sous air.

Il est possible de procéder plusieurs fois à chacune des étapes a) à d) précédentes, séparément ou en association avec au moins une autre des étapes a) à d) précédentes ainsi qu'il est connu de l'homme du métier. Par exemple, il est possible de procéder au moins deux fois à la succession des étapes b), c) et d).

L'imprégnation de la matrice est de préférence effectuée par la méthode d'imprégnation dite "à sec" bien connue de l'homme du métier.

L'imprégnation peut être effectuée en une seule étape par une solution contenant l'ensemble des éléments constitutifs du catalyseur final.

Les éléments choisis parmi le groupe IIIB y compris les lanthanides et les actinides, le groupe IVB, le groupe VB, le groupe VIB, et le groupe VIII, de même que l'élément choisi dans le groupe formé par P, B et Si, et l'élément choisi parmi les anions du groupe VIIA, peuvent être introduits par une ou plusieurs opérations d'échange ionique sur la matrice choisie, à l'aide d'une solution contenant au moins un sel précurseur de métal de transition ou de terre rare.

Les catalyseurs massiques (sans support) sulfurés par le procédé de la présente invention peuvent être préparés par toute méthode bien connue de l'homme du métier. De façon générale, on procède à la synthèse des catalyseurs massiques à partir de solides comprenant au moins un élément des groupes VIB et VIII et/ou au moins un élément choisi parmi le groupe IIIB y compris les lanthanides et les actinides, le groupe IVB et le groupe VB et éventuellement à la présence de dopants choisis dans le groupe : P, B, Si et halogènes (groupe VIIA), lesdits solides étant obtenus respectivement à partir des sels des éléments sélectionnés, lesdites synthèses étant réalisées simultanément ou successivement, l'ordre important peu, dans le même espace physique ou séparément ; puis de procéder au mélange mécanique des dits solides avec éventuellement une matrice, et enfin, après une mise en forme, de procéder à une calcination dudit mélange mécanique de façon à obtenir le catalyseur.

Les éléments du groupe VB sont choisis parmi le vanadium, le niobium, le thallium, les éléments du groupe IVB sont choisis parmi le titane, le zirconium, le hafnium, de préférence le titane. Les éléments du groupe IIIB sont choisis parmi le yttrium, le lanthane, le cérium, le praséodyme, le néodyme, le samarium, l'europium, le gadolinium, le terbium, le dysprosium, le holmium, l'erbium, le thulium, l'ytterbium, le lutétium, l'actinium, le thorium et l'uranium. Les éléments du groupe VIII sont choisis parmi le fer, le cobalt, le nickel, le ruthénium, le rhodium, le palladium, l'osmium, l'iridium et le platine, de préférence le fer, le cobalt, le nickel. Les éléments du groupe VIB sont choisis parmi le chrome, le molybdène et le tungstène.

Parmi les composés contenant au moins un élément dont le numéro atomique est compris dans l'ensemble constitué des éléments du groupe IIIB incluant les lanthanides et les actinides, du groupe IVB et du groupe VB, les groupes VIB et VIII, on peut utiliser les oxydes, les hydroxydes, les oxyhydroxydes, les acides, les polyoxométallates, les alkoxydes, les oxalates, les sels d'ammonium, les nitrates, les carbonates, les hydroxycarbonates, les carboxylates, les halogénures, les oxyhalogénures, les phosphates, les hydrures, les thiosels en particulier d'ammonium. On utilise de préférence les oxydes et les sels des métaux de transition, lanthanides et actinides.

La source de phosphore préférée est l'acide phosphorique $H_3PO_4$, mais ses sels, et ses esters comme les phosphates alcalins, phosphates d'ammonium, conviennent également. Le phosphore peut par exemple être introduit sous la forme d'un mélange d'acide phosphorique et un composé organique basique contenant de l'azote telle que l'ammoniac, les amines primaires et secondaires, les amines cycliques, les composés de la famille de la pyridine, les composés de la famille des quinoléines et les composés de la famille du pyrrole.

De nombreuses sources de silicium peuvent être employées. Ainsi, on peut utiliser un hydrogel, un aérogel ou une suspension colloïdale d'oxyde de silicium, les oxydes de précipitation, les oxydes provenant de l'hydrolyse d'esters tel que l'orthosilicate d'éthyle $Si(OEt)_4$, les silanes et polysilanes, les siloxanes et polysiloxanes, ou les silicates d'halogénures comme le fluorosilicate d'ammonium $(NH_4)_2SiF_6$ ou le fluorosilicate de sodium $Na_2SiF_6$. Le silicium peut être ajouté par exemple par imprégnation de silicate d'éthyle en solution dans un alcool.

La source de bore peut être un borate amorphe, tel que le biborate ou le pentaborate d'ammonium. Le bore peut être introduit par exemple par une solution d'acide borique dans un alcool.

Les sources d'élément du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les anions chlorures peuvent être introduit sous la forme d'acide chlorhydrique, ou de ces sels. Ces sels sont formés avec des métaux alcalins, l'ammonium ou un composé organique. Dans ce dernier cas, le sel est avantageusement formé dans le mélange réactionnel par réaction entre le composé organique et l'acide chlorhydrique.

La matrice minérale poreuse habituellement amorphe ou mal cristallisée est habituellement choisie dans le groupe formé par l'alumine, la silice, la silice-alumine, la magnésie, l'argile, l'oxyde de titane, l'oxyde de zirconium, l'oxyde de lanthane, l'oxyde de cérium, les phosphates d'aluminium, les phosphates de bore, ou un mélange d'au moins deux des oxydes cités ci-dessus et les combinaisons alumine-oxyde de bore, les mélanges alumine-titane, alumine-zircone et titane-zircone. On peut choisir également les aluminates, et par exemple les aluminates de magnésium, de calcium, de baryum, de manganèse, de fer, de cobalt, de nickel, de cuivre et de zinc, les aluminates mixtes et par exemple ceux contenant au moins deux des métaux cités ci-dessus. On peut choisir également les titanates, et par exemple les titanates de zinc, nickel, cobalt. De manière préférée, on utilise des matrices contenant de l'alumine, sous toutes ses formes connues de l'homme du métier, par exemple l'alumine gamma. On peut aussi avantageusement utiliser des mélanges d'alumine et de silice et des mélanges d'alumine et d'oxyde de bore.

La matrice peut également renfermer, en plus d'au moins un des composés cités ci-dessus, au moins une argile simple synthétique ou naturelle de type phyllosilicate 2 :1 dioctaédrique ou phyllosilicate 3 :1 trioctaédrique telles que la kaolinite, l'antigorite, la chrysotile, la montmorillonnite, la beidellite, la vermiculite, le talc, l'hectorite, la saponite, la laponite. Ces argiles peuvent être éventuellement délaminées. On peut aussi avantageusement utiliser des mélanges d'alumine et d'argile et des mélanges de silice-alumine et d'argile.

La matrice peut également renfermer, en plus d'au moins un des composés cités ci-dessus, au moins un composé choisi dans le groupe formé par la famille des tamis moléculaires de type aluminosilicate cristallisé, zéolithes synthétiques et naturelles telles que la zéolithe Y, la zéolithe Y fluorée, la zéolithe Y contenant des terres rares, la zéolithe X, la zéolithe L, la zéolithe bêta, la mordénite à petits pores, la mordénite à grands pores, les zéolithes oméga, NU-10, ZSM-22, NU-86, NU-87, NU-88, et la zéolite ZSM-5. Parmi les zéolithes on préfère habituellement employer des zéolithes dont le rapport atome de charpente silicium/aluminium (Si/A1) est supérieur à environ 3:1. On emploie avantageusement des zéolithes de structure faujasite et en particulier les zéolithes Y stabilisées et ultrastabilisées (USY) soit sous forme au moins partiellement échangées avec des cations métalliques, par exemple des cations des métaux alcalino-terreux et/ou des cations de métaux de terres rares de numéros atomiques dd 57 à 71 inclus, soit sous forme hydrogène (*Zéolite Molecular Sieves Structure,* Chemistry and Uses, D.W. BRECK, J.WILLEY and Sons 1973).

Les supports acides peuvent être choisis également dans le groupe formé par la famille des tamis moléculaires cristallisés non zéolithiques tels que les silices mésoporeuses, la silicalite, les silicoaluminophosphates, les aluminophosphates, les ferrosilicates, les silicoaluminates de titane, les borosilicates, les chromosilicates et les aluminophosphates de métaux de transition (dont le cobalt).

La mise en forme de la matrice ou du catalyseur massique peut être réalisée par exemple par extrusion, par pastillage, par la méthode de la goutte d'huile (oil-drop), par granulation au plateau tournant ou par toute autre méthode bien connue de l'homme du métier. La matrice ou le catalyseur massique préformé est alors habituellement calcinée sous air, usuellement à une température d'au moins 100°C, couramment d'environ 200 à 1000°C.

La sulfuration des catalyseurs précités est réalisée par le procédé selon l'invention.

Les catalyseurs d'hydrotraitement précités et obtenus par le procédé de la présente invention sont utilisés pour l'hydroraffinage et/ou l'hydroconversion/hydrocraquage de charges hydrocarbonées telles que les coupes pétrolières, les coupes issues du charbon ou les hydrocarbures produits à partir du gaz naturel. Lesdits catalyseurs sont plus particulièrement mis en oeuvre dans des réactions d'hydrotraitement, hydrogénation, hydrodéazotation, hydrodéoxygénation, hydrodéaromatisation, hydrodésulfuration, hydrodémétallisation, hydroisomérisation, hydrodéalkylation, déshydrogénation. Les catalyseurs précités et sulfurés par le procédé de la présente invention sont également avantageusement utilisés pour l'hydroconversion/hydrocraquage de charges hydrocarbonées telles que par exemple des charges contenant des composés aromatiques et/ou oléfiniques, et/ou naphténiques, et/ou paraffiniques, lesdites charges contenant éventuellement des métaux, et/ou de l'azote, et/ou de l'oxygène et /ou du soufre.

Dans ces utilisations, les catalyseurs précités et sulfurés par le procédé de la présente invention présentent une activité améliorée par rapport à l'art antérieur.

Les charges employées dans les divers procédés utilisant les catalyseurs précités et sulfurés par le procédé de la présente invention sont généralement choisies dans le groupe formé par les essences, les gazoles, les gazoles sous vide, les résidus désasphaltés ou non, les huiles paraffiniques, les cires et paraffines. Elles contiennent au moins un hétéroatome tels que soufre, oxygène, azote et éventuellement des métaux tels que nickel et vanadium. Les conditions de l'hydroraffinage ou de l'hydroconversion telles que température, pression, rapport volumique litre d'hydrogène / litre d'hydrocarbure, vitesse volumique horaire, peuvent être très variables en fonction de la nature de la charge, de la qualité des produits désirés et des installations dont dispose le raffineur. Les conditions opératoires utilisées dans le ou les réacteurs des divers procédés utilisant les catalyseurs précités et sulfurés par le procédé de la présente invention sont classiques : une température supérieure à 200°C, de préférence comprise entre 200 et 450°C, sous une pression comprise entre 0,5 et 30 MPa, de préférence inférieure à 20 MPa, la vitesse spatiale étant comprise entre 0,1 et 10h$^{-1}$, de préférence comprise entre 0,1 et 8h$^{-1}$, et de manière très préférée entre 0,2 et 6h$^{-1}$, et la quantité d'hydrogène introduite est telle que le rapport volumique litre d'hydrogène / litre d'hydrocarbure soit compris entre 10 et 50001/1, de préférence entre 100 et 2000 1/1.

## EXEMPLES

Les exemples qui suivent précisent l'invention sans toutefois en limiter la portée.

Un catalyseur NiMoP supporté sur alumine à forte teneur en phase active a été préparé (Exemple 1). Des échantillons de ce catalyseur ont ensuite été sulfurés selon différentes procédures de *sulfuration in situ* (Exemples 2, 3, 4, 5, 6) et *ex situ* (Exemple 7). Les performances de ces échantillons sulfurés ont été évaluées dans une unité pilote d'hydrodésulfuration équipée d'un réacteur isotherme à lit fixe traversé à courant ascendant (Exemple 8). Le volume de catalyseur chargé est de 40 cm$^3$ et est basé sur la densité de remplissage tassé (DRT en g/cm$^3$) mesurée sur le catalyseur oxyde.

Les taux de sulfuration d'échantillons sulfurés dans des conditions conformes à l'invention ont été comparés à ceux d'échantillons sulfurés dans des conditions non-conformes à l'invention (Exemple 9).

## Exemple 1 : Préparation d'un catalyseur d'hydrotraitement NiMoP à l'état oxyde : Catalyseur C1

On a utilisé une matrice composée de boehmite tabulaire ultrafine ou gel d'alumine, commercialisée sous le nom SB3 par la société Condéa Chemie GmbH. Ce gel a été mélangé à une solution aqueuse contenant de l'acide nitrique à 66 % (7 % en poids d'acide par gramme de gel sec), puis malaxé pendant 15 minutes. A l'issue de ce malaxage, la pâte obtenue est passée à travers une filière ayant des orifices cylindriques de diamètre égal à 1,3 mm. Les extrudés sont ensuite séchés pendant une nuit à 120°C, puis calcinés à 550°C pendant 2 heures sous air humide contenant 7,5 % en volume d'eau. On obtient ainsi des extrudés cylindriques de 1,2 mm de diamètre, ayant une surface spécifique de 255 m$^2$/g, un volume poreux de 0,60 cm$^3$/g et une distribution en taille de pore monomodale centrée sur 100 Å. L'analyse de la matrice par la diffraction des rayons X révèle que celle-ci est composée uniquement d'alumine gamma cubique de faible cristallinité.

Sur le support d'alumine décrit précédemment et qui se présente sous la forme « extrudé », on a ajouté du nickel, du molybdène et du phosphore. Les sels de ces trois éléments sont introduits simultanément par imprégnation à sec du support. Le sel de nickel utilisé est le carbonate de nickel, le précurseur de molybdène est l'oxyde de molybdène MoO$_3$ et le phosphore est introduit sous la forme d'acide phosphorique H$_3$PO$_4$. La solution d'imprégnation est préparée par dissolution à 90°C, de l'oxyde de molybdène, du carbonate de nickel, dans la solution d'acide phosphorique diluée dans l'eau de manière à obtenir un volume de solution équivalent au volume poreux de l'alumine. Après imprégnation à sec, les extrudés sont laissés à mûrir en atmosphère saturée en eau pendant 12 h, puis ils sont séchés une nuit à 120°C et enfin calcinés à 500°C pendant 2 heures sous air sec. Les teneurs finales en oxydes de métaux, la surface spécifique du catalyseur (déterminée selon la méthode BET bien connue de l'homme du métier) et la densité de remplissage tassé sont alors les suivants :

- MoO$_3$:            21 % en poids
- NiO :            4,3 % en poids
- P$_2$O$_5$ :            5 % en poids
- Surface spécifique (S BET) :            165 (m$^2$/g)
- DRT (g/cm3) :            0,795

**Exemple 2 : sulfuration H$_2$S-H$_2$ in situ à pression atmosphérique avec un rapport molaire H$_2$S/H$_2$ égal à 1 (Catalyseur C2 non conforme)**

Un échantillon de 40 cm3 de catalyseur oxyde (31,8 g) est sulfuré dans l'unité pilote à pression atmosphérique par un mélange gazeux de composition 50 % volume de sulfure d'hydrogène (H$_2$S) et 50 % volume d'hydrogène, soit un rapport molaire H$_2$S/H$_2$ égal à 1. La sulfuration est réalisée en deux étapes, la première étant une phase de montée en température contrôlée à 3°C/min avec un palier intermédiaire de 1 heure à 230°C, la seconde étant un palier de 2 heures à la température finale de sulfuration de 350°C. Au cours de la première étape, l'H$_2$S est injecté à 100°C. Le débit du mélange gazeux est ajusté de telle façon que la quantité de soufre injectée avant que le catalyseur n'atteigne la température finale de sulfuration corresponde à 130 % de la stoechiométrie de soufre nécessaire à la sulfuration complète du catalyseur. Après sulfuration, le catalyseur est refroidi sous le mélange gazeux d'H$_2$S(50 %)-H$_2$(50 %) jusqu'à la température ambiante. A température ambiante, l'unité est mise sous pression d'hydrogène pur à la pression totale du test d'HDS.

**Exemple 3 : sulfuration H$_2$S-H$_2$, in situ à pression atmosphérique avec un rapport molaire H$_2$S/H$_2$ égal à 9 (Catalyseur C3 conforme à l'invention)**

Un échantillon de 40 cm$^3$ de catalyseur oxyde (31,8 g) est sulfuré dans l'unité pilote à pression atmosphérique par un mélange gazeux de composition 90 % volume de sulfure d'hydrogène (H$_2$S) et 10 % volume d'hydrogène, soit un rapport molaire H$_2$S/H$_2$ égal à 9. La sulfuration est réalisée en deux étapes, la première étant une phase de montée en température contrôlée à 3°C/min avec un palier intermédiaire de 1 heure à 230°C, la seconde étant un palier de 2 heures à la température finale de sulfuration de 350°C. Au cours de la première étape, l'H$_2$S est injecté à 100°C. Le débit du mélange gazeux est ajusté de telle façon que la quantité de soufre injectée avant que le catalyseur n'atteigne la température finale de sulfuration corresponde à 130 % de la stoechiométrie de soufre nécessaire à la sulfuration complète du catalyseur. Après sulfuration, le catalyseur est refroidi sous le mélange gazeux d'H$_2$S(90 %)-H$_2$(10) jusqu'à la température ambiante. A température ambiante, l'unité est mise sous pression d'hydrogène pur à la pression totale du test d'HDS.

**Exemple 4 : sulfuration H$_2$S-H$_2$-N$_2$ in situ à pression atmosphérique avec un rapport molaire H$_2$S/H$_2$ égal à 9 (Catalyseur C4 conforme à l'invention)**

Un échantillon de 40 cm$^3$ de catalyseur oxyde (31,8 g) est sulfuré dans l'unité pilote à pression atmosphérique par un mélange gazeux de composition 85 % volume d'azote, 13,5 % volume de sulfure d'hydrogène (H$_2$S) et 1,5 % volume d'hydrogène. Par rapport à l'Exemple 3, les pressions partielles d'H$_2$S et d'H$_2$ sont divisées par un facteur de 6,67, le rapport molaire H$_2$S/H$_2$ demeurant égal à 9.
La sulfuration est réalisée en deux étapes, la première étant une phase de montée en température contrôlée à 3°C/min avec un palier intermédiaire de 1 heure à 230°C, la seconde étant un palier de 2 heures à la température finale de sulfuration de 350°C. Au cours de la première étape, l'H$_2$S est injecté à 100°C. Le débit du mélange gazeux ainsi que la rampe de montée en température sont ajustés de telle façon que la quantité de soufre injectée avant que le catalyseur n'atteigne la température finale de sulfuration corresponde à 130 % de la stoechiométrie de soufre nécessaire à la sulfuration complète du catalyseur. Après sulfuration, le catalyseur est refroidi sous le mélange gazeux d'H$_2$S (13,5%)-H$_2$(1,5 %)-N$_2$(85 %) jusqu'à la température ambiante. A température ambiante, l'unité est mise sous pression d'hydrogène pur à la pression totale du test d'HDS.

### Exemple 5 : sulfuration H$_2$S-H$_2$ in situ sous 2 MPa de pression totale avec un rapport molaire H$_2$S/H$_2$ égal à 9 (Catalyseur C5 conforme à l'invention)

Un échantillon de 40 cm$^3$ de catalyseur oxyde (31,8 g) est sulfuré dans l'unité pilote sous 2 MPa de pression totale par un mélange gazeux de composition 90 % volume de sulfure d'hydrogène (H$_2$S) et 10 % volume d'hydrogène. Par rapport à l'Exemple 3, les pressions partielles d'H$_2$S et d'H$_2$ sont multipliés par un facteur 20, le rapport molaire H$_2$S/H$_2$ demeurant égal à 9.

La sulfuration est réalisée en deux étapes, la première étant une phase de montée en température contrôlée à 3°C/min avec un palier intermédiaire de 1 heure à 230°C, la seconde étant un palier de 2 heures à la température finale de sulfuration de 350°C. Au cours de la première étape, l'H$_2$S est injecté à 100°C.

Le débit du mélange gazeux ainsi que la rampe de montée en température sont ajustés de telle façon que la quantité de soufre injectée avant que le catalyseur n'atteigne la température finale de sulfuration corresponde à 130 % de la stoechiométrie de soufre nécessaire à la sulfuration complète du catalyseur. Après sulfuration, le catalyseur est refroidi sous le mélange gazeux H$_2$S(90 %)-H$_2$(10 %) jusqu'à la température ambiante. A température ambiante, l'unité est mise sous pression d'hydrogène pur à la pression totale du test d'HDS.

### Exemple 6 : sulfuration H$_2$S-H$_2$-N$_2$ in situ sous 2 MPa de pression totale avec un rapport molaire H$_2$S/H$_2$ égal à 9 (Catalyseur C6 conforme à l'invention)

Un échantillon de 40 cm$^3$ de catalyseur oxyde (31,8 g) est sulfuré dans l'unité pilote sous 2 MPa de pression totale par un mélange gazeux de composition 85 % volume d'azote, 13,5 % volume de sulfure d'hydrogène (H$_2$S) et 1,5 % volume d'hydrogène. Par rapport à l'Exemple 3, les pressions partielles d'H$_2$S et d'H$_2$ sont multipliés par un facteur 3, le rapport molaire H$_2$S/H$_2$ demeurant égal à 9.

La sulfuration est réalisée en deux étapes, la première étant une phase de montée en température contrôlée à 3°C/min avec un palier intermédiaire de 1 heure à 230°C, la seconde étant un palier de 2 heures à la température finale de sulfuration de 350°C. Au cours de la première étape, l'H$_2$S est injecté à 100°C.

Le débit du mélange gazeux ainsi que la rampe de montée en température sont ajustés de telle façon que la quantité de soufre injectée avant que le catalyseur n'atteigne la température finale de sulfuration corresponde à 130 % de la stoechiométrie de soufre nécessaire à la sulfuration complète du catalyseur. Après sulfuration, le catalyseur est refroidi sous le mélange gazeux H$_2$S(13,5 %)-H$_2$(1,5 %)-N$_2$(85 %) jusqu'à la température ambiante. A température ambiante, l'unité est mise sous pression d'hydrogène pur à la pression totale du test d'HDS.

### Exemple 7 : sulfuration H$_2$S-H$_2$-N$_2$ ex situ en fit fixe à pression atmosphérique avec un rapport molaire H$_2$S/H$_2$ égal à 9 suivie d'une étape de passivation oxydante (Catalyseur C7 conforme à l'invention)

Un échantillon de 40 cm$^3$ de catalyseur oxyde (31,8 g) est sulfuré *ex situ* dans un réacteur de même technologie que celui utilisé sur l'unité pilote d'HDS, à pression atmosphérique, par un mélange gazeux de composition 85 % volume d'azote, 13,5 % volume de sulfure d'hydrogène (H$_2$S) et 1,5 % volume d'hydrogène, soit un rapport molaire H$_2$S/H$_2$ égal à 9.

La sulfuration est réalisée en deux étapes, la première étant une phase de montée en température contrôlée à 3°C/min avec un palier intermédiaire de 1 heure à 230°C, la seconde étant un palier de 2 heures à la température finale de sulfuration de 350°C. Au cours de la première étape, l'H$_2$S est injecté à 100°C.

Le débit du mélange gazeux est ajusté de telle façon que la quantité de soufre injectée avant que le catalyseur n'atteigne la température finale de sulfuration corresponde à 130 % de la stoechiométrie de soufre nécessaire à la sulfuration complète du catalyseur. Après sulfuration, le catalyseur est refroidi sous le mélange gazeux d'H$_2$S(13,5%)-H$_2$(1,5 %)-N$_2$(85 %) jusqu'à 150°C, puis sous hydrogène jusqu'à 80°C. A 80°C, après un balayage d'une heure sous azote, le catalyseur est passivé par un flux gazeux oxydant O$_2$-N$_2$ à pression partielle d'O$_2$ croissante. La pression partielle d'O$_2$ est augmentée de 1 kPa à 21,3 kPa par palier de 2 kPa. Le catalyseur est maintenu sous chaque palier d'atmosphère oxydante jusqu'à ce que l'effet exothermique disparaisse totalement et que la température revienne à 80°C. A 21,3 kPa d'O$_2$ et après disparition totale de l'effet exothermique, le catalyseur est ensuite refroidi jusqu'à la température ambiante. La totalité de l'échantillon est ensuite chargée dans l'unité pilote pour évaluation catalytique.

### Exemple 8 : Test en hydrodésulfuration d'un gasoil SR

Les Catalyseurs C$_1$ oxyde et C$_2$ à C$_7$ précédemment décrits ont été comparés en hydrodésulfuration d'un gasoil "straight run" dont les principales caractéristiques sont données ci-après :

- Densité à 15°C :      0,8537

EP 1 634 939 B1

- Soufre : 1,35 % en poids
- Distillation Simulée :

  • PI : 160°C
  • 10 % : 245°C
  • 50 % : 317°C
  • 90 % : 376°C
  • PF : 404°C

Le test d'hydrodésulfuration a été conduit dans les conditions opératoires suivantes :

- Rapport $H_2$/HC : 400 l/l
- Pression totale : 7 MPa
- Volume de catalyseur : 40 cm$^3$
- Température : 340°C
- Débit d'hydrogène : 32 l/h
- Débit de charge : 80 cm$^3$/h
- Vitesse Volumique Horaire : 2 h$^{-1}$

Un test de référence est réalisé en chargeant dans l'unité le catalyseur NiMoP oxyde de l'Exemple 1 (Catalyseur C1) et en procédant à une étape de sulfuration en passant la charge de test définie ci-dessus à laquelle on a ajouté 2 % poids de diméthyldisulfure (DMDS) dans les conditions du test définies ci-dessus sauf en ce qui concerne la température qui est de 350°C, la dite température étant maintenue pendant 10 heures. Après cette étape, la température est abaissée à la température du test, 340°C, et la charge de gasoil pure est injectée.

Les performances catalytiques des catalyseurs testés sont données dans le tableau suivant. Elles sont exprimées en activité relative, en posant que celle du Catalyseur C1 est égale à 100 et en considérant qu'elles sont d'ordre 1,5. La relation liant l'activité et la conversion en hydrodésulfuration (%HDS) est la suivante :

$$A_{HDS} = [\frac{100}{(100 - \%HDS)}]^{0,5} - 1$$

Tableau 1 : Activité des catalyseurs en hydrodésulfuration de gazole

| Catalyseur | $A_{HDS}$ relativement à C1 |
|---|---|
| C1 | 100 |
| C2 comparatif | 99 |
| C3 | 140 |
| C4 | 138 |
| C5 | 142 |
| C6 | 137 |
| C7 | 143 |

Le Tableau 1 montre le gain d'activité important obtenu sur les catalyseurs sulfurés selon l'invention (C3, C4, C5, C6, C7) par rapport au catalyseur sulfuré sous charge (C1) ou au catalyseur sulfuré sous $H_2$S-$H_2$ avec un rapport volumique $H_2$S/$H_2$ égal à 1 (C2).

**Exemple 9 : Taux de sulfuration**

Les taux de sulfuration d'échantillons sulfurés dans des conditions de sulfuration reportées dans les Exemples 2, 3, 4 et 7 sont présentés dans le Tableau 2. Dans le cas des sulfurations réalisées dans les conditions des Exemples 2, 3 et 4, les échantillons ont été transférés sous atmosphère d'azote pour l'analyse de la teneur en soufre. Le taux de sulfuration est défini comme le rapport entre les ratios molaires S/(Ni+Mo) expérimental et S/(Ni+Mo) théorique, multiplié par 100, ce ratio théorique correspondant à la transformation totale des oxydes de molybdène $MoO_3$ et de nickel NiO en sulfures respectivement $MoS_2$ et $Ni_3S_2$.

Tableau 2 : taux de sulfuration

| Conditions de sulfuration | Taux de sulfuration (%) |
|---|---|
| C 2 | 82 |
| C 3 | 102 |
| C 4 | 98 |
| C 7 | 103 |

On remarque que les catalyseurs sulfurés selon les conditions de l'invention (conditions des Exemples 3, 4 et 7) présentent des taux de sulfuration proches de 100 % contrairement aux catalyseurs sulfurés dans des conditions non conformes à l'invention (conditions de l'Exemple 2).

**Revendications**

1.  Procédé de sulfuration de catalyseurs d'hydrotraitement comprenant une étape de sulfuration sous atmosphère gaz contenant de l'hydrogène sulfuré ($H_2S$), de l'hydrogène ($H_2$) ledit procédé étant **caractérisé en ce que** le rapport molaire $H_2S/H_2$ est supérieur à 4 et que la pression partielle d'$H_2S$ est au moins égale à 1 kPa.

2.  Procédé selon la revendication 1 dans lequel le rapport molaire $H_2S/H_2$ est supérieur à 7.

3.  Procédé selon l'une des revendications 1 à 2 dans lequel l'atmosphère gaz contient un gaz inerte de dilution.

4.  Procédé selon l'une des revendications 1 à 3 dans lequel l'étape de sulfuration est effectuée à une température inférieure à 600°C.

5.  Procédé selon la revendication 4 dans lequel l'étape de sulfuration est effectuée à une température inférieure à 500°C.

6.  Procédé selon l'une des revendications précédentes dans lequel l'étape de sulfuration est réalisée *in situ.*

7.  Procédé selon la revendication 6 dans lequel l'hydrogène sulfuré provient des unités de lavage des gaz aux amines présentes dans la raffinerie pour épurer les gaz en provenance des unités d'hydrotraitement, de craquage thermique, de craquage catalytique et d'hydrocraquage.

8.  Procédé selon l'une des revendications 6 à 7 comprenant les étapes suivantes :

    • purge de l'unité d'hydrotraitement après chargement par un gaz inerte puis par de l'hydrogène et pressurisation de l'unité jusqu'à la pression nominale du procédé d'hydrotraitement ou jusqu'à la pression minimale de fonctionnement du compresseur de recycle ;
    • chauffage sous hydrogène du lit catalytique jusqu'à une température inférieure à 200°C ;
    • étape de sulfuration :

    - injection d'$H_2S$ pur ou en mélange avec un gaz inerte avec un débit de gaz total $H_2S$-$H_2$ ou $H_2S$-$H_2$-gaz inerte calculé par rapport au volume de catalyseur chargé compris entre 1 et 10000 litres de gaz par litre de catalyseur, mesurés dans les conditions normales de température et de pression et avec une température d'injection du gaz sulfurant inférieure à 200°C ;
    - montée en température jusqu'à une température finale de sulfuration supérieure à 300°C et inférieure à 600°C, directement jusqu'au palier final de sulfuration ou en respectant un ou plusieurs paliers ;
    - palier à la température finale de sulfuration pour une durée inférieure à 24 h ;

    • refroidissement de l'unité sous atmosphère sulfurante jusqu'à une température inférieure à 300°C,
    • arrêt de l'arrivée d'$H_2S$ pur ou en mélange avec un gaz inerte et mise si nécessaire de l'unité à la pression du procédé d'hydrotraitement.

9. Procédé selon la revendication 8 dans lequel la montée en température entre la température d'injection du gaz sulfurant et la température finale de sulfuration comprend un palier intermédiaire à une température comprise entre 210 et 250°C.

10. Procédé selon l'une des revendications 8 à 9 dans lequel la température finale de sulfuration est comprise entre 300 et 380°C.

11. Procédé selon l'une des revendications 1 à 5 dans lequel l'étape de sulfuration est réalisée *ex situ.*

12. Procédé selon la revendication 11 dans lequel l'étape de sulfuration est suivie d'une étape de passivation oxydante sous flux gazeux oxydant contenant une pression partielle en oxygène d'au plus 21,3 kPa.

13. Procédé selon l'une des revendications 11 à 12 dans lequel le catalyseur est en lit fixe, en lit fluidisé ou en lit mobile.

14. Procédé selon l'une des revendications 11 à 13 comprenant les étapes suivantes :

   • purge de l'unité de sulfuration après chargement par un gaz inerte puis par de l'hydrogène et pressurisation de l'unité si nécessaire ;
   • chauffage sous hydrogène du lit catalytique jusqu'à une température inférieure à 200°C ;
   • étape de sulfuration :

   - injection de l'$H_2S$ pur ou en mélange avec un gaz inerte dans l'unité de sulfuration avec un débit de gaz total $H_2S$-$H_2$ ou $H_2S$-$H_2$-gaz inerte calculé par rapport au volume de catalyseur chargé compris entre 1 et 10000 litres de gaz par litre de catalyseur, mesurés dans les conditions normales de température et de pression à une température d'injection du gaz sulfurant inférieure à 200°C ;
   - montée en température jusqu'à une température finale de sulfuration supérieure à 300°C et inférieure à 600°C, directement jusqu'au palier final de sulfuration ou en respectant un ou plusieurs paliers ;
   - palier à la température finale de sulfuration pour une durée inférieure à 24 heures ;

   • refroidissement de l'unité sous atmosphère sulfurante jusqu'à une température inférieure à 300°C ;
   • refroidissement sous $H_2$ de l'unité jusqu'à une température inférieure à 150°C ;
   • purge sous gaz inerte de l'unité à une température inférieure à 150°C ;
   • étape de passivation oxydante : traitement du catalyseur sous un flux gazeux oxydant contenant une pression partielle en oxygène d'au plus 21,3 kPa et à une température inférieure à 150°C pour une durée maximale de 24 heures ;
   • refroidissement de l'unité jusqu'à la température ambiante, dépressurisation si nécessaire et déchargement du catalyseur sous air ambiant.

15. Procédé selon la revendication 14 dans lequel la pression partielle d'oxygène est augmentée de 1kPa à 21,3 kPa par palier de 2 à 4 kPa.

16. Procédé selon la revendication 1 à 15 dans lequel le catalyseur est utilisé pour l'hydroraffinage et/ou l'hydroconversion / hydrocraquage de charges hydrocarbonées.


**Claims**

1. Process for sulfurization of hydrotrcating catalysts comprising a stage of sulfurization under a gas atmosphere that contains hydrogen sulfide ($H_2S$) and hydrogen ($H_2$), whereby said process is **characterized in that** the $H_2S$/$H_2$ molar ratio is greater than 4 and **in that** the $H_2S$ partial pressure is at least equal to 1 kPa.

2. Process according to claim 1, wherein the $H_2S$/$H_2$ molar ratio is more than 7.

3. Process according to claims I to 2 , wherein the gas atmosphere contains a cover gas for dilution.

4. Process according to claims 1 to 3, wherein the sulfurization stage is carried out at a temperature of less than 600°C.

**5.** Process according to claim 4, wherein the sulfurization stage is carried out at a temperature of less than 500°C.

**6.** Process according to one of the preceding claims, wherein the sulfurization stage is carried out in situ.

**7.** Process according to claim 6, wherein the hydrogen sulfide is obtained from units for washing gases with amines that are present in the refinery to purify the gases coming from the units for hydrotreatment, thermal cracking, catalytic cracking and hydrocracking.

**8.** Process according to claims 6 to 7, comprising the following stages:

- Purging the hydrotreatment unit after charging by a cover gas, then by hydrogen, and pressurization of the unit up to the nominal pressure of the hydrotreatment process or up to the minimum pressure of operation of the recycling compressor;
- Heating under hydrogen of the catalytic bed up to a temperature of less than 200°C;
- Sulfurization stage:

o Injection of $H_2S$ that is pure or mixed with a cover gas with a total gas flow rate of $H_2S$-$H_2$ or $H_2S$-$H_2$-cover gas that is calculated relative to the volume of charged catalyst between 1 and 10000 liters of gas per liter of catalyst, measured under normal temperature and pressure conditions, and with a sulfurizing gas injection temperature of less than 200°C;
o Rise in temperature up to a final sulfurization temperature of more than 300°C and less than 600°C, right up to the final sulfurization stage or in one or more stages;
o Stage at the final sulfurization temperature for a duration of less than 24 hours;

- Cooling of the unit under sulfurizing atmosphere up to a temperature of less than 300°C;
- Halting of the intake of $H_2S$ that is pure or mixed with a cover gas, and, if necessary, bringing the unit to the pressure of the hydrotreatment process.

**9.** Process according to claim 8, wherein the rise in temperature between the temperature of injecting the sulfurizing gas and the final sulfurization temperature comprises an intermediate stage at a temperature of between 210 and 250°C.

**10.** Process according to claims 8 to 9, wherein the final sulfurization temperature is between 300 and 380°C.

**11.** Process according to claims 1 to 5, wherein the sulfurization stage is carried out ex situ.

**12.** Process according to claim 11, wherein the sulfurization stage is followed by an oxidizing passivation stage under an oxidizing gas flow that contains a partial pressure of oxygen of at most 21.3 kPa.

**13.** Process according to claims 11 to 12, wherein the catalyst is in a fixed bed, a fluidized bed or a moving bed.

**14.** Process according to claims I 1 to 13 comprising the following stages:

- Purging of the sulfurization unit after charging by a cover gas then by hydrogen and pressurization of the unit, if necessary;
- Heating under hydrogen of the catalytic bed to a temperature of less than 200°C.;
- Sulfurization stage:

o Injection of H2S that is pure or mixed with a cover gas in the sulfurization unit with a total gas flow rate of $H_2H$-$H_2$ or $H_2S$-$H_2$-cover gas that is calculated relative to the volume of charged catalyst between 1 and 10000 liters of gas per liter of catalyst, measured under the normal temperature and pressure conditions at a temperature of injecting sulfurizing gas of less than 200°C;
o Rise in temperature to a final sulfurization temperature of more than 300°C and less than 600°C, right up to the final sulfturization stage or in one or more stages;
o Stage at the final sulfurization temperature for a duration of less than 24 hours;

- Cooling of the unit under sulfurizing atmosphere to a temperature of less than 300°C;
- Cooling under $H_2$ of the unit to a temperature of less than 150°C;

- Purging under cover gas (preferably nitrogen) of the unit to a temperature of less than 150°C to eliminate $H_2S$ and $H_2$;
- Oxidizing passivation stage: treatment of the catalyst under an oxidizing gas flow that contains a partial pressure of oxygen of at most 21.3 kPa and at a temperature of less than 150°C for a maximum period of 24 hours;
- Cooling of the unit to the ambient temperature, depressurization if necessary and unloading of the catalyst in ambient air.

15. Process according to claim 14, wherein the partial pressure of oxygen is increased from I kPa to 21.3 kPa per stage of 2 to 4 kPa.

16. Process according to claims 1 to 15, wherein the catalyst is used.

**Patentansprüche**

1. Verfahren zur Sulfurierung von Hydrotreating-Katalysatoren, das einen Schritt zur Sulfurierung unter Gasatmosphäre, welche Schwefelwasserstoff ($H_2S$), Wasserstoff ($H_2$) enthält, umfasst, wobei das Verfahren **dadurch gekennzeichnet ist, dass** das $H_2S/H_2$-Molverhältnis größer als 4 ist und dass der $H_2S$-Partialdruck mindestens gleich 1 kPa ist.

2. Verfahren nach Anspruch 1, wobei das $H_2S/H_2$-Molverhältnis größer als 7 ist.

3. Verfahren nach einem der Ansprüche 1 bis 2, wobei die Gasatmosphäre ein inertes Verdünnungsgas enthält.

4. Verfahren nach einem der Ansprüche 1 bis 3, wobei der Schritt zur Sulfurierung bei einer Temperatur unterhalb von 600 °C, durchgeführt wird.

5. Verfahren nach Anspruch 4, wobei der Schritt zur Sulfurierung bei einer Temperatur unterhalb von 500 °C durchgeführt wird.

6. Verfahren nach einem der vorhergehenden Ansprüche, wobei der Schritt zur Sulfurierung *in situ* durchgeführt wird.

7. Verfahren nach Anspruch 6, wobei der Schwefelwasserstoff aus Einheiten zur Aminwäsche der Gase stammt, die in der Raffinerie vorhanden sind, um die Gase aus den Einheiten zum Hydrotreating, zum thermischen Cracken, zum katalytischen Cracken und zum Hydrocracken zu reinigen.

8. Verfahren nach einem der Ansprüche 6 bis 7, das die folgenden Schritte umfasst:

   • Spülen der Hydrotreating-Einheit nach dem Beladen mit einem inerten Gas, dann mit Wasserstoff und Beaufschlagung der Einheit mit Druck bis zum Nenndruck des Hydrotreating-Verfahrens oder bis zum Mindestbetriebsdruck eines Rückführungskompressors;
   • Erhitzen des Katalysebetts unter Wasserstoff bis auf eine Temperatur unterhalb von 200 °C;
   • Schritt zur Sulfurierung:

      - Injizieren von $H_2S$, rein oder gemischt mit einem inerten Gas, mit einem Gesamtgasdurchsatz $H_2S$-$H_2$ oder $H_2S$-$H_2$-inertes Gas, der bezogen auf das Volumen des beladenen Katalysators berechnet wird, im Bereich zwischen 1 und 10.000 Liter Gas pro Liter Katalysator, gemessen unter den normalen Temperatur- und Druckbedingungen und mit einer Injektionstemperatur des schwefelwasserstoffhaltigen Gases unterhalb von 200 °C;
      - Anheben der Temperatur bis auf eine finale Sulfurierungstemperatur oberhalb von 300 °C und unterhalb von 600 °C, direkt bis zur finalen Sulfurierungsstufe oder unter Einhaltung einer oder mehrerer Stufen;
      - Beibehalten der finalen Sulfurierungstemperatur für eine Dauer von weniger als 24 Std.;

   • Abkühlen der Einheit unter schwefelwasserstoffhaltiger Atmosphäre bis auf eine Temperatur unterhalb von 300 °C,
   • Stoppen der Zufuhr von $H_2S$, rein oder gemischt mit einem inerten Gas, und gegebenenfalls Beaufschlagen der Einheit mit dem Druck des Hydrotreating-Verfahrens.

9. Verfahren nach Anspruch 8, wobei der Temperaturanstieg zwischen der Injektionstemperatur des schwefelwasserstoffhaltigen Gases und der finalen Sulfurierungstemperatur eine Zwischenstufe mit einer Temperatur im Bereich zwischen 210 und 250 °C umfasst.

10. Verfahren nach einem der Ansprüche 8 bis 9, wobei die finale Sulfurierungstemperatur im Bereich zwischen 300 und 380 °C liegt.

11. Verfahren nach einem der Ansprüche 1 bis 5, wobei der Schritt zur Sulfurierung ex *situ* durchgeführt wird.

12. Verfahren nach Anspruch 11, wobei auf den Schritt zur Sulfurierung ein Schritt zur oxidativen Passivierung unter einem Oxidationsgasstrom folgt, der einen Sauerstoffpartialdruck von höchstens 21,3 kPa aufweist.

13. Verfahren nach einem der Ansprüche 11 bis 12, wobei sich der Katalysator im Festbett, im Fließbett oder im Bewegtbett befindet.

14. Verfahren nach einem der Ansprüche 11 bis 13, das die folgenden Schritte umfasst:

• Spülen der Sulfurierungseinheit nach dem Beladen mit einem inerten Gas, dann mit Wasserstoff und gegebenenfalls Beaufschlagung der Einheit mit Druck;
• Erhitzen des Katalysebetts unter Wasserstoff bis auf eine Temperatur unterhalb von 200 °C;
• Schritt zur Sulfurierung:

- Injizieren von $H_2S$, rein oder gemischt mit einem inerten Gas, in die Sulfurierungseinheit mit einem Gesamtgasdurchsatz $H_2S$-$H_2$ oder $H_2S$-$H_2$-inertes Gas, der bezogen auf das Volumen des beladenen Katalysators berechnet wird, im Bereich zwischen 1 und 10.000 Liter Gas pro Liter Katalysator, gemessen unter den normalen Temperatur- und Druckbedingungen bei einer Injektionstemperatur des schwefelwasserstoffhaltigen Gases unterhalb von 200 °C;
- Anheben der Temperatur bis auf eine finale Sulfurierungstemperatur oberhalb von 300 °C und unterhalb von 600 °C, direkt bis zur finalen Sulfurierungsstufe oder unter Einhaltung einer oder mehrerer Stufen;
- Beibehalten der finale Sulfurierungstemperatur für eine Dauer von weniger als 24 Stunden;

• Abkühlen der Einheit unter schwefelwasserstoffhaltiger Atmosphäre bis auf eine Temperatur unterhalb von 300 °C;
• Abkühlen der Einheit unter $H_2$ bis auf eine Temperatur unterhalb von 150 °C;
• Spülen der Einheit unter inertem Gas bei einer Temperatur unterhalb von 150 °C;
• Schritt zur oxidativen Passivierung: Behandeln des Katalysators unter einem Oxidationsgasstrom, der einen Sauerstoffpartialdruck von höchstens 21,3 kPa aufweist, und bei einer Temperatur unterhalb von 150 °C für eine maximale Dauer von 24 Stunden;
• Abkühlen der Einheit bis auf Umgebungstemperatur, gegebenenfalls Druckminderung und Entladen des Katalysators unter Umgebungsluft.

15. Verfahren nach Anspruch 14, wobei der Sauerstoffpartialdruck jeweils stufenweise um 2 bis 4 kPa von 1 kPa auf 21,3 kPa erhöht wird.

16. Verfahren nach Anspruch 1 bis 15, wobei der Katalysator für die Hydroraffination und/oder die Hydrokonversion/das Hydrocracken von Kohlenwasserstoffbeschickungen verwendet wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2778347 A1
- FR 2755379 A1
- GB 1401620 A
- US 6325920 B1
- FR 2778346 A1
- EP 0564317 B1
- EP 0707890 B1
- US 5958816 A
- US 6316382 B1
- US 5688736 A
- US 5468372 A
- EP 0130850 B1
- US 4530917 A
- WO 0232572 A2